# EUROPÄISCHE PATENTANMELDUNG

(11) **EP 1 985 503 A2**
(43) Veröffentlichungstag der Anmeldung: **29.10.2008**
(21) Anmeldenummer: 08007253.1
(22) Anmeldetag: 12.04.2008
(51) Int. Cl.: B60R 16/02

(54) **Verfahren und System zur Verwaltung von Kraftfahrzeugdaten**

(30) Priorität: 16.04.2007 DE 102007018139
(71) Anmelder: Deutsche Telekom AG, 53113 Bonn (DE)
(72) Erfinder: van Engelshoven, Kai, 53639 Königswinter (DE); Händler, Andreas, 53604 Bad Honnef (DE)

(57) **Zusammenfassung**

Die Erfindung betrifft ein Verfahren und ein System zur Verwaltung von Daten, insbesondere Betriebsdaten, eines Kraftfahrzeugs, bei dem Daten eines Kraftfahrzeugs in einen fahrzeuginternen Speicher geschrieben und gespeichert werden, wobei die gespeicherten Daten dem erfassenden Fahrzeug (F) mittels einer Fahrzeugkennung zugeordnet werden und durch eine Telekommunikationsverbindung (K, K1, K2) an wenigstens ein Rechenzentrum (R) eines Telekommunikationsnetzes übertragen werden und dort zum Abruf für interessierte Dritte (D) zur Verfügung gehalten werden.

## Beschreibung

Die Erfindung betrifft ein Verfahren zur Verwaltung von Daten, insbesondere Betriebsdaten eines Kraftfahrzeugs, bei dem die Daten eines Kraftfahrzeugs in einen fahrzeuginternen Speicher geschrieben und gespeichert werden. Die Erfindung betrifft weiterhin ein System zur Verwaltung von Daten, insbesondere Betriebsdaten eines Kraftfahrzeugs, insbesondere welches geeignet ist, das erfindungsgemäße Verfahren durchzuführen.

Im Stand der Technik ist es allgemein bekannt, einige Daten von Kraftfahrzeugen, beispielsweise solche, die aus der Produktion bekannt sind, oder auch solche, die im Betrieb des Kraftfahrzeugs entstehen, innerhalb des Kraftfahrzeugs zu speichern. Beispielsweise kann die mit einem Kraftfahrzeug untrennbar verbundene Fahrgestellnummer neben einer Einprägung in das Fahrzeugchassis auch elektronisch in einem Speicher des Kraftfahrzeugs abgelegt sein.

Darüber hinaus ist es auch bekannt, Betriebsdaten, wie beispielsweise die Kilometerlaufleistung, in einem Speicher des Kraftfahrzeugs zu speichern und beispielsweise zum Abruf für Servicewerkstätten bereitzustellen. Beispielsweise ist es hier bekannt, einen Speicher im Schlüssel eines Kraftfahrzeugs vorzusehen, in welchen diese Kilometerlaufleistungsdaten abgespeichert werden, so dass bereits durch Abgabe des Schlüssels in einer Servicewerkstatt der Servicewerkstatt unmittelbar durch Auslesen des Schlüsselspeichers diese relevanten Informationen zur Verfügung stehen.

Bei diesem im Stand der Technik bekannten Vorgehen wird es als nachteilig empfunden, dass auf die Daten, die in den elektronischen Speicher eingeschrieben werden, üblicherweise nur die Vertragswerkstätten bzw. die Händler Zugriff haben. Dabei besteht der Zugriff darüber hinaus selbst für die Händler und Vertragswerkstätten nur dann, wenn das Fahrzeug dort abgegeben wurde. Somit liegen weder dem Hersteller noch einem Händler oder Vertragswerkstätten Informationen über das betreffende Kraftfahrzeug vor, die während der Lebensdauer eines Kraftfahrzeugs entstehen.

Hieran besteht jedoch gerade für die Hersteller von Kraftfahrzeugen ein besonderes Interesse, da die Hersteller üblicherweise bestrebt sind, ihre Kraftfahrzeuge fortwährend weiter zu entwickeln und in diese Weiterentwicklung bevorzugterweise Daten eingehen sollen, die aus den Kraftfahrzeugen gewonnen werden. Bislang sind somit die Hersteller darauf angewiesen, ihre Kraftfahrzeuge längeren Feldtests, d.h. somit nur internen Tests zu unterziehen, um Daten aus den Kraftfahrzeugen für die Weiterentwicklung und Optimierung der Kraftfahrzeuge zu gewinnen. Eine Gewinnung von Daten betreffend ein Kraftfahrzeug aus dem aktuellen tagtäglichen Gebrauch heraus und somit über die gesamte Lebensdauer eines Kraftfahrzeugs von der Erstzulassung bis zur Verschrottung ist bislang im Stand der Technik nicht vorgesehen.

Aufgabe der Erfindung ist es, ein Verfahren und auch ein System, insbesondere zur Durchführung dieses Verfahrens bereitzustellen, mit dem die Möglichkeit geschaffen wird, im Wesentlichen beliebigen oder auch vorbestimmten Dritten einen Zugriff auf Daten von Kraftfahrzeugen zu ermöglichen, die zum einen inherent mit dem Kraftfahrzeug verbunden sind, wie beispielsweise Produktionsdaten sowie andererseits auch auf Daten, die während des Betriebs eines Fahrzeugs, insbesondere im alltäglichen Gebrauch durch den Endnutzer, entstehen.

So soll diesen beliebigen oder vorbestimmten Dritten die Möglichkeit eingeräumt werden, Dienste anzubieten oder gegebenenfalls auch nur intern Dienste in Verbindung mit den Kraftfahrzeugdaten zu generieren. Hierbei werden unter den Diensten jegliche Anwendungen und/oder Auswertungen verstanden, die mit den Daten aus einem bestimmten Kraftfahrzeug in Verbindung stehen. Es kann sich hierbei um Dienste oder Anwendungen handeln, die nur dem betreffenden Dritten zur Verfügung stehen oder die durch den betreffenden Dritten auch nach außen hin zur Verfügung gestellt werden, also beispielsweise an den Nutzer eines Kraftfahrzeugs, insbesondere den Kraftfahrzeughalter, oder aber auch an andere, insbesondere hierfür autorisierte Stellen.

Erfindungsgemäß wird diese Aufgabe dadurch gelöst, dass die gespeicherten Daten, insbesondere Betriebsdaten, dem Fahrzeug und hier insbesondere dem Fahrzeug, welches die Betriebsdaten selbst erfasst, mittels einer Fahrzeugkennung zugeordnet werden. Eine Fahrzeugkennung kann beispielsweise die Fahrgestellnummer sein, die sich während der gesamten Lebensdauer eines Fahrzeugs von der Erstzulassung bis zur Verschrottung nicht ändert.

Ebenso besteht die Möglichkeit, als Fahrzeugkennung das polizeiliche Kennzeichen zu verwenden, hier ist dann jedoch zu berücksichtigen, dass sich dieses Kennzeichen ändern kann, insbesondere wenn der Wechsel eines Fahrzeughalters stattfindet. Ebenso können jegliche andere Fahrzeugkennungen verwendet werden, die eine eindeutige Identifizierung mit einem Fahrzeug ermöglichen.

So ist es bereits durch diese Zuordnung gewährleistet, dass die Betriebsdaten, die in einem fahrzeuginternen Speicher erfasst werden, insbesondere die durch das Fahrzeug selbst erfasst werden und gegebenenfalls auch solche Daten, die von extern in den Speicher eingeschrieben werden, beispielsweise durch Dritte, wie den Fahrzeughalter oder auch Werkstätten etc., eindeutig nur mit diesem betreffenden Fahrzeug in Verbindung gebracht werden.

Es ist sodann erfindungsgemäß weiterhin vorgesehen, dass diese Daten, die in dem fahrzeuginternen Speicher vorliegen, durch eine direkte oder auch indirekte Kommunikation an wenigstens ein Rechenzentrum innerhalb eines Telekommunikationsnetzes übertragen werden und dort zum Abruf für interessierte Dritte zur Verfügung gehalten werden. Insbesondere durch die Übertragung der Daten an ein fahrzeugexternes Rechenzentrum wird somit die Möglichkeit geschaffen, die Daten für einen Zugriff durch Dritte bereitzuhalten.

Hierbei kann es sich gegebenenfalls um beliebige Dritte oder auch um vorbestimmte Dritte, insbesondere autorisierte Dritte handeln, denen der Zugriff zu diesen Daten gewährt werden soll.

Unter den interessierten Dritten werden dabei im Rahmen dieser Erfindung beispielsweise und nicht abschließend die Hersteller, Händler, Fahrzeugnutzer, insbesondere Fahrzeughalter, Behörden, Versicherungen, Pannendienste oder auch sonstige Dritte verstanden.

Jeder dieser dritten Parteien kann dabei ein Interesse haben an der Nutzung dieser Fahrzeugdaten. Beispielsweise können die Hersteller aus den während der tagtäglichen Nutzung gewonnenen Daten Informationen gewinnen, die es gestatten, ihre Fahrzeuge weiter zu entwickeln, insbesondere anhand üblicher Nutzungsverhalten der jeweiligen Fahrzeugnutzer etc.

Händler können, insbesondere wenn diese auch als Servicewerkstätten im üblichen Fall auftreten, aus dem fahrzeuginternen Speicher somit jederzeit durch die Kommunikation und den Zugriff über das Rechenzentrum fahrzeugbezogene Daten erhalten, die interessant und wesentlich sind, insbesondere während Wartungsarbeiten. Dies kann z.B. auch wie vorgenannt das Nutzungsverhalten der Fahrzeugnutzer mit einschließen, wie beispielsweise die Häufigkeit und Art der Bedienung, wie beispielsweise den Fahrstil, was gegebenenfalls auch gerade für Autovermietungen interessant sein kann. Darüber hinaus kann es vorgesehen sein, dass Behörden aus den Fahrzeugdaten Informationen gewinnen, die sie ihren Diensten oder Obliegenheiten zugrunde legen, wie beispielsweise die Abgabenberechnung.

Versicherungen können aus den Daten Informationen gewinnen, die es gestatten, eine Versicherungsprämie individuell zu ermitteln, beispielsweise anhand von Kilometerlaufleistungen, Fahrverhalten etc. Ebenso können Pannendienste aus den gespeicherten Daten Informationen gewinnen, die es gegebenenfalls gestatten, im Fehlerfall schneller auf eine Fehlerursache zu schließen.

Sämtliche vorgenannten Aufzählungen sind hierbei als beispielhaft und nicht abschließend zu werten, da sich neben den hier genannten Anwendungsmöglichkeiten viele weitere andere, bereits bekannte oder auch noch nicht bekannte Anwendungsmöglichkeiten erschließen können.

In einer erfindungsgemäßen Ausgestaltung kann es dabei vorgesehen sein, dass eine Kommunikationsvorrichtung in einem Fahrzeug vorgesehen ist, mittels der direkt aus dem Fahrzeug die Daten über ein Telekommunikationsnetz an das wenigstens eine Rechenzentrum übermittelt werden.

So kann es hierbei vorgesehen sein, dass eine solche Kommunikationsvorrichtung bereits durch eine Mobiltelefoneinrichtung gebildet wird, die heutzutage ohnehin häufig in einem Fahrzeug für die Mobilkommunikation des Fahrzeugnutzers zur Verfügung steht. So kann eine solche Kommunikationsvorrichtung insbesondere in den Zeiten, in denen sie nicht vom Fahrzeugnutzer selbst genutzt wird, verwendet werden, um die in dem internen Speicher des Fahrzeugs abgelegten Daten über ein Telekommunikationsnetz an das wenigstens eine Rechenzentrum zu kommunizieren und diese dort zu speichern. Hierfür können die üblicherweise während einer Mobilfunkkommunikation nach den heutigen Standards vorgesehenen Protokolle eingesetzt werden, wie beispielsweise die Paketdatenübertragung, SMS oder e-mail-Dienste.

Neben dieser Möglichkeit kann auch eine Kommunikationsvorrichtung vorgesehen sein, die vollständig separat nur für diesen Einsatzzweck in das Fahrzeug integriert wird und somit unabhängig und autark von einer eventuellen Mobilfunkeinrichtung im Fahrzeug funktioniert. So kann das erfindungsgemäße Verfahren auch mit Fahrzeugen ausgeführt werden, die nicht mit derartigen persönlichen Kommunikationsmitteln der Fahrzeughalter ausgestattet sind.

Das Vorsehen einer Kommunikationsvorrichtung bereits unmittelbar im Fahrzeug hat dabei den besonderen Vorteil, dass gegebenenfalls sogar in Echtzeit die erfassten Daten über ein Telekommunikationsnetz an das wenigstens eine Rechenzentrum übermittelt werden können.

So kann beispielsweise eine Telekommunikationsstandleitung zwischen einem Fahrzeug und dem Rechenzentrum installiert sein oder es kann auch vorgesehen sein, dass zu festen vorgegebenen Zeitpunkten oder zu Zeiten, wenn der interne Speicher sein maximales Fassungsvermögen erreicht, eine Kommunikationsverbindung zum Rechenzentrum etabliert wird.

Da das Fahrzeug aufgrund der integrierten Kommunikationsvorrichtung vollständig autark agieren kann, ist dies somit im Wesentlichen jederzeit möglich, insbesondere sofern entsprechende Empfangs- und Sendebedingungen vorliegen.

In einer anderen alternativen oder auch gegebenenfalls kombinierbaren Ausführung kann es auch vorgesehen sein, dass ein Fahrzeug eine Kommunikationsvorrichtung umfasst, mittels der die Daten zunächst an eine von mehreren stationären Empfangsstellen übermittelt werden, wobei die Daten anschließend von der Empfangsstelle an das wenigstens eine Rechenzentrum durch eine Telekommunikationsverbindung weitergeleitet werden.

Eine solche Kommunikation zwischen einer Kommunikationsvorrichtung des Fahrzeugs und einer stationären Empfangsstelle, die gegebenenfalls auch Sendeeigenschaften für eine bidirektionale Kommunikation, zumindest aber Empfangseigenschaften für eine unidirektionale Datenkommunikation bereitstellt, kann z.B. auch durch eine Nahfeldkommunikation realisiert werden.

Hierbei wird unter einer Nahfeldkommunikation eine solche Kommunikation verstanden, die im Wesentlichen bis zu einem Entfernungsbereich von 1 - 100 Metern, bevorzugt 1 - 10 Meter, erfolgt. So kann für eine derartige Nahfeldkommunikation auch auf etablierte Standardtechniken, wie Kommunikationen über RFID-Transponder und Empfänger sowie auch über Bluetooth oder WLan-Kommunikation zurückgegriffen werden. Ebenso kann es selbstverständlich vorgesehen sein, für eine solche Kommunikation einen eigenen Standard zu bilden.

Die hier genannten, mehreren stationären Empfangsstellen können beispielsweise und nicht abschließend gebildet sein durch Empfangsvorrichtungen an Tankstellen, an Brücken, wie sie beispielsweise ohnehin häufig durch Mautstationen gegeben sind, beim technischen Überwachungsverein, wo Fahrzeuge regelmäßig oder zumindest im Ein- oder Mehrjahresturnus vorgestellt werden müssen, an Abstellplätzen, Ampelanlagen etc.

Letzten Endes sind jegliche Orte geeignet, an denen eine hohe Wahrscheinlichkeit besteht, dass Fahrzeuge diese Orte regelmäßig anfahren, so dass hierdurch auch ein regelmäßiger Datenaustausch bzw. eine Datenkommunikation an das wenigstens eine Rechenzentrum ermöglicht wird. Hierbei kann die weitere Kommunikation zwischen einer Empfangsstelle und dem wenigstens einen Rechenzentrum über übliche Kommunikationswege erfolgen, wie beispielsweise genauso bei der direkten Kommunikation zwischen Kraftfahrzeug und Rechenzentrum, also beispielsweise über Mobilfunk, Festnetzkommunikation, Internet, e-mail etc.

In einer wiederum anderen Ausführungsform, die alternativ oder in Kombination mit dem vorherigen realisierbar ist, kann es auch vorgesehen sein, dass ein Fahrzeug einen mobilen, aus dem Fahrzeug entfernbaren Datenträger umfasst, mittels dem die Daten aus dem Fahrzeug entnehmbar und an eine Datenverarbeitungsanlage übertragbar sind, wobei die Daten von der Datenverarbeitungsanlage über eine Telekommunikationsnetzwerk an das wenigstens eine Rechenzentrum und somit indirekt übermittelt werden.

Hierbei kann es gegebenenfalls vorgesehen sein, dass eine automatische Übermittlung an das Rechenzentrum in dem Augenblick oder zu vorbestimmten Zeiten erfolgt, wenn die Daten von dem entfernbaren Datenträger an die Datenverarbeitungsanlage übertragen wurden. Gegebenenfalls kann es auch vorgesehen sein, dass die Weiterübertragung an das Rechenzentrum erst auf Anforderung entweder des Rechenzentrums oder des Nutzers der Datenverarbeitungsanlage erfolgt.

Beispielsweise kann es sich bei der Datenverarbeitungsanlage um einen Computer handeln, der dem Fahrzeugnutzer zur Verfügung steht. So besteht hier auch die Möglichkeit, unmittelbar die Daten, die im Fahrzeug gewonnen werden, auch dem Fahrzeugnutzer im direkten Zugriff zur Verfügung zu stellen, ohne dass der Fahrzeugnutzer einen Zugriff über das Rechenzentrum vornehmen muss. Es besteht so weiterhin auch die Möglichkeit, dass ein Fahrzeugnutzer Daten ergänzen kann, die sodann auf den entfernbaren Datenträger übertragen werden und/oder zumindest im Datensatz ergänzt werden und an das Rechenzentrum übermittelbar sind.

Der Fahrzeugnutzer kann so auch selbst Auswertungen der gewonnenen Daten vornehmen, beispielsweise anhand der festgestellten Kilometerleistungen und Treibstoffverbräuche die Wirtschaftlichkeit seines Fahrverhaltens beeinflussen. Ebenso besteht die Möglichkeit, ein Fahrtenbuch zu führen oder sonstige Anwendungen auszuführen.

Für sämtliche der vorgenannten verschiedenen Alternativen oder auch miteinander kombinierbaren Ausführungen kann es in einer Weiterbildung vorgesehen sein, dass die Daten, insbesondere wenn sie mittels eines Datenträgers zumindest auf Teilwegen der Gesamtübertragung kommuniziert werden, nach Menge oder Kategorien beschränkt übertragen werden.

So kann beispielsweise der Speicherplatz des internen Speichers beschränkt werden, wenn vorgesehen wird, dass nach einer Übertragung der Daten aus dem internen Speicher zum Rechenzentrum oder der Übertragung aus dem internen Speicher mittels eines entfernbaren Datenträgers zu einer Datenverarbeitungsanlage der interne Speicher gelöscht wird und somit wieder frei ist um neue Daten aufzunehmen.

So werden in dem internen Datenspeicher immer nur die aktuellen Daten vorgehalten, die seit der letzten Übertragung an das Rechenzentrum oder Entnahme der Daten mittels eines entfernbaren Datenträgers angefallen sind.

Auch kann es vorgesehen sein, die Daten in Kategorien einzuteilen und nach Kategorien beschränkt zu übertragen. Hier kann grundsätzlich jede Art der Kategorisierung vorgesehen sein, beispielsweise die Kategorisierung für bestimmte Dritte, also z.B. nach Herstellerdaten, Nutzerdaten, Händlerdaten, Werkstattdaten, Behördendaten etc. Hier sind auch jegliche andere, nicht genannte Kategorien denkbar.

Weiterhin kann es auch vorgesehen sein, die Daten zu kategorisieren, beispielsweise in der vorgenannten Art, um so einen Zugriff auf die Daten seitens Dritter kategorieabhängig zu gestalten. So können bestimmte Dritte nur auf die Teile der Daten Zugriff erhalten, die für diese betreffenden Dritten freigegeben sind. So kann es demnach vorgesehen sein, dass Behörden keinen Zugriff erhalten auf die Daten, die nur den Hersteller eines Kraftfahrzeugs betreffen. So kann beispielsweise ein kategorieübergreifender Datenzugriff ausgeschlossen werden. Es kann hier jedoch auch vorgesehen sein, dass bestimmte Arten von Daten gleichzeitig in mehreren Kategorien vorliegen.

Die Kategorisierung der Daten kann hierbei bereits unmittelbar im Kraftfahrzeug erfolgen, so dass die Verwaltung der Daten bezüglich dieses Aspektes schon durch das Kraftfahrzeug vorgenommen wird und somit die fertig kategorisierten Daten übertragen werden.

In einer anderen Ausführung kann es ebenso vorgesehen sein, dass die Daten an das Rechenzentrum ohne Kategorisierung übertragen werden und erst innerhalb eines Rechenzentrums eine Kategorisierung erfolgt. Hierbei können die Regeln zur Kategorisierung innerhalb des Rechenzentrums vorgehalten und gegebenenfalls auch geändert werden.

In einer weiteren Ausführung kann es auch vorgesehen sein, dass der Nutzer eines Fahrzeugs die Nutzung der Daten seines Fahrzeugs freigibt, insbesondere auch eine Freigabe kategorieabhängig erteilt wird. So können hierbei insbesondere Regelungen des Datenschutzgesetzes in Deutschland oder auch in anderen Ländern berücksichtigt werden. Es kann somit standardmäßig vorgesehen sein, dass ein Kraftfahrzeug bzw. ein System zur Durchführung eines solchen erfindungsgemäßen Verfahrens grundsätzlich geeignet ist, ein solches Verfahren jedoch erst dann durchgeführt wird, wenn der Nutzer dieses freigibt, insbesondere da mit der Weiterleitung der Daten an ein Rechenzentrum gegebenenfalls auch automatisch Daten übermittelt und somit preisgegeben werden, die auf den Nutzer bzw. sein Verhalten Rückschlüsse zulassen.

Hierbei kann es vorgesehen sein, einen Nutzer zur Freigabe der Nutzung der Daten zu bewegen, in dem seitens der Hersteller oder auch anderer interessierter Dritte der oben genannten Art dem Nutzer ein Bonus versprochen wird, wie beispielsweise Kaufpreisnachlässe bei Kraftfahrzeugen, Steuer- oder Versicherungsvergünstigungen etc.

In einer weiterhin bevorzugten Anwendung des Verfahrens kann es vorgesehen sein, dass fahrzeugbezogene Abgaben, wie beispielsweise Steuern oder aber auch Versicherungen oder sonstige Gebühren, die im Zusammenhang mit einer Kraftfahrzeugnutzung anfallen können, anhand von den erhobenen Fahrzeugdaten individuell bestimmt werden.

So besteht nach dem erfindungsgemäßen Verfahren und System die Möglichkeit, dass nicht nur wie bisher üblich pauschal solche Abgaben oder Beiträge berechnet werden, sondern dass hier anhand der zur Verfügung gestellten Fahrzeugdaten, wie beispielsweise Treibstoffverbrauch oder auch Abgasausstoß individuell diese Abgaben, z.B. Steuern berechnet werden. So kann es demnach auch vorgesehen sein, dass die durch die Abgaben begünstigten Behörden oder sonstige Institutionen auf die erhobenen Daten zugreifen und anhand dieser Daten die Abgaben ermitteln und an den Fahrzeughalter bzw. Fahrzeugnutzer mitteilen.

Ebenso kann es vorgesehen sein, dass automatisch durch das System, beispielsweise im Rechenzentrum anhand der erhobenen Daten die Abgaben ermittelt werden und an die Behörden und/oder die Fahrzeughalter übermittelt werden, so dass beide Parteien, d.h. der Zahlungspflichtige und der Zahlungsbegünstigte, über die Höhe informiert werden.

Zusammenfassend ist somit festzustellen, dass das erfindungsgemäße Verfahren und System Möglichkeiten bereitstellt, ein Kraftfahrzeug während seines gesamten Lebenszyklus von der Erstzulassung bis zur Entsorgung, beispielsweise Verschrottung, beobachtet werden kann hinsichtlich derjenigen Daten, die innerhalb eines Kraftfahrzeugs erfasst und gespeichert werden können. Dies können neben den bereits in der vorgenannten Beschreibung genannten Daten jegliche Daten sein, die von einem Fahrzeug mittels Sensoren oder sonstiger Hilfsmittel zur Verfügung gestellt werden und/oder durch den Fahrzeugnutzer ergänzt werden, und speicherbar sind.

Insbesondere der Hersteller erhält so die Möglichkeit, durch Zugriff auf die Daten über das Rechenzentrum, welches in ein Telekommunikationsnetz eingebunden ist, das von ihm hergestellte Kraftfahrzeug während seines gesamten Lebenszyklus zu beobachten und hierüber sowohl dem Nutzer Informationen zukommen zu lassen als auch für sich selbst Informationen zu gewinnen, beispielsweise zur Kraftfahrzeugpflege und Weiterentwicklung. Rückrufaktionen können beispielsweise so auch individuell auf jeglichen Nutzer eines Kraftfahrzeugs abgestimmt werden, da gegebenenfalls nicht alle Fahrzeuge von einer solchen Aktion betroffen sind.

Bei dem Einsatz eines mobilen Datenträgers, der entweder direkt als interner Speicher des Kraftfahrzeugs dienen kann oder mit einem internen Speicher eines Kraftfahrzeugs in Kommunikationsverbindung steht, kann es auch vorgesehen sein, dass ein solcher, am Ende der Lebensdauer eines Fahrzeugs an einen Hersteller oder eine Behörde übermittelt wird. Dies kann auch als Nachweis dienen für die ordnungsgemäße Entsorgung des Kraftfahrzeugs, insbesondere so dass hier auch mehrere Aspekte berücksichtigt werden, dass nämlich zum einen der Fahrzeughalter nach Abgabe des mobilen Datenträgers einen Verwertungsnachweis für die Abmeldung des Fahrzeugs erhält, gegebenenfalls die Abmeldung selbst nur durch Abgabe des Datenträgers initiiert werden kann und dass zum anderen durch die Rückgabe des Datenträgers an einen Hersteller dieser, insbesondere dann, wenn der Datenträger geeignet ist, alle während der Lebenszeit des Fahrzeugs angefallenen Daten zu speichern, diese Daten zur Auswertung erhält.

Ein Ausführungsbeispiel der Erfindung wird anhand der nachfolgenden Figuren näher erläutert.

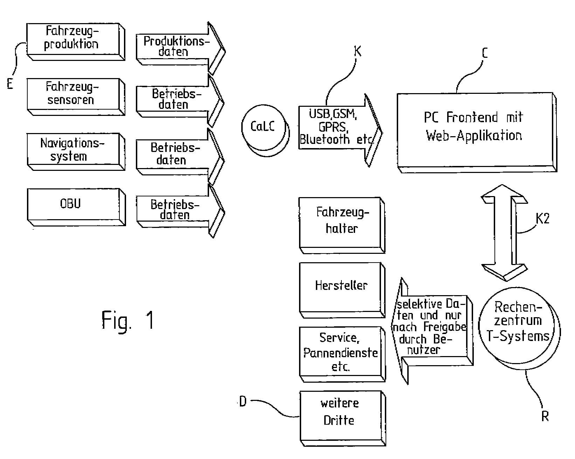

Die Figur 1 zeigt in einer schematischen Übersicht das Grundprinzip der Erfindung. Hier wird deutlich, dass innerhalb eines Kraftfahrzeugs verschiedene Einheiten, aber auch externe Einheiten E vorgesehen sein können, die Daten betreffend dieses spezielle Kraftfahrzeug, zur Verfügung stellen. Ersichtlich ist es hier, dass es sich beispielsweise um Produktionsdaten handeln kann, die aus der Fahrzeugproduktion stammen, also beispielsweise durch den Hersteller selbst generiert sind. Ebenso können Betriebsdaten entstehen, die beispielsweise von Fahrzeugsensoren oder einem Navigationssystem oder auch einer On-Board-Unit, d.h. jeglicher Einheit, bereit gestellt werden kann, die geeignet ist, Daten während der Lebensdauer eines Fahrzeugs zu erfassen.

Die Figur 1 zeigt darüber hinaus weiterhin, dass sämtliche dieser Daten, also Betriebsdaten, Produktionsdaten oder auch sonstige, hier nicht gezeigte Daten, einem Speicher CaLC zugeführt werden, der intern in einem Fahrzeug vorgesehen sein kann und beispielsweise auch einen mobilen, entfernbaren Speicher darstellt. Hier steht die Abkürzung CaLC für Car Lifecycle Card, was implizieren kann, dass es sich um einen entfernbaren, z.B. kartenförmigen Speicher handelt, der von einem Nutzer aus dem Fahrzeug entnommen werden kann und geeignet ist, die vorgenannten Daten zu speichern.

So können Fahrzeugdaten unterschiedlichster Art im Fahrzeug gesammelt und in diesem Speicher abgelegt werden, unabhängig davon, ob es sich um einen mobilen oder einen im Fahrzeug stationären Speicher handelt. Bei mobilen Speichern kann es sich insbesondere um solche handeln, die heute standardmäßig zur Verfügung stehen, wie beispielsweise USB-Sticks oder sonstige Speicher mit standardmäßigen Schnittstellen. Die Figur 1 zeigt hier weiterhin, dass die Daten aus diesem Speicher durch eine Kommunikationsverbindung K2 an ein Rechenzentrum R übermittelt werden können.

Hierbei kann es vorgesehen sein, dass die Datenübertragung zu dem wenigstens einen Rechenzentrum R nicht über eine direkte Kommunikation, sondern indirekt zunächst mittels einer Kommunikation K zu einem Computer C und anschließend über eine Kommunikation K2 zum Rechenzentrum R erfolgt. So kann über den Computer C in gleicher Weise auch eine Datenabfrage bzw. Datennutzung der im Rechenzentrum gespeicherten Daten erfolgen, z.B. über ein Web-Interface des Rechenzentrums.

Ebenfalls wird hier deutlich, dass auf die bei dem Rechenzentrum R gespeicherten Daten mehrere interessierte Dritte D, gegebenenfalls selektiv nicht auf alle Daten, sondern nur auf freigegebene, insbesondere durch den Benutzer freigegebene Daten zugreifen können. Bei diesen Dritten D handelt es sich beispielsweise um den Fahrzeughalter, den Hersteller, Service- und Pannendienste bzw. jegliche andere weitere Dritte.

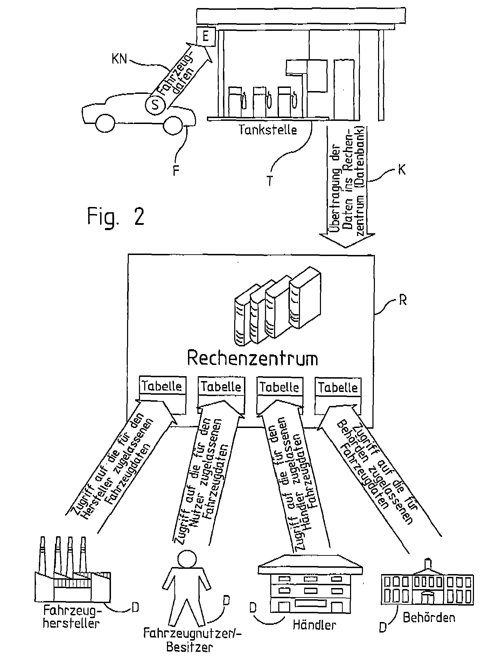

Die Figur 2 zeigt eine andere Ausführung der Erfindung, bei dem die Daten aus dem internen Speicher S eines Fahrzeugs F über eine Nahfeldkommunikation KN an einen Empfänger E übertragen wird, der an einer strategisch günstigen Stelle, nämlich hier an einer Tankstelle T, angeordnet ist. Es werden im Anschluss die sodann vom Empfänger E der Tankstelle T gesammelten Daten durch eine Kommunikation K an das Rechenzentrum R übertragen.

Im Rechenzentrum R oder schon vorher können die einzelnen Daten kategorisiert sein, was hier durch die verschiedenen Tabellen symbolisiert sein soll. Die verschiedenen einzelnen interessierten Dritten D können sodann jeweils auf die nur für sie zugelassenen Fahrzeugdaten zugreifen. Demnach kann es also vorgesehen sein, den Zugriff über eine interne Rechtevergabe zu regeln, wobei es vorgesehen sein kann, dass diese Rechtevergabe beispielsweise durch den Nutzer erfolgt, insbesondere dadurch, dass dieser dem Zugriff durch die verschiedenen interessierten Dritten D zustimmt. Hier kann es vorgesehen sein, dass der Nutzer bereits beim Kauf eines Fahrzeugs diese Zustimmung erteilt oder auch im Nachhinein auf jeglichem möglichen Weg, z.B. einem Vertragsabschluß der im Zusammenhang mit dem Fahrzeug steht, wie z.B. ein Versicherungsvertrag.

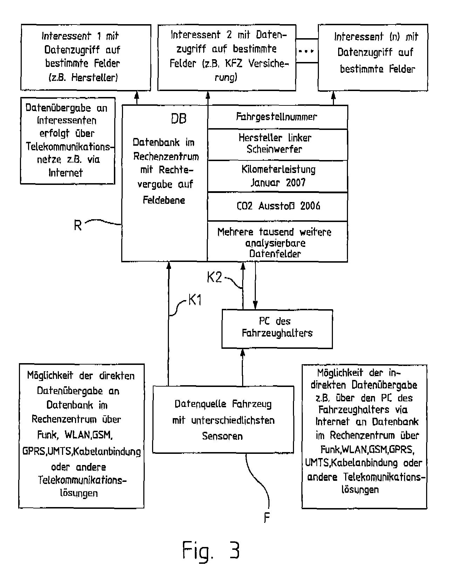

Die Figur 3 zeigt eine weitere Übersicht zur Darstellung des erfindungsgemäßen Verfahrens. Deutlich wird hier, dass ein Fahrzeug F verschiedenste Daten, z.B. die von unterschiedlichen Sensoren des Fahrzeugs gewonnen wurden, als Datenquelle zur Verfügung steht. Hier kann, durch diese Figur verdeutlicht, sowohl eine direkte Kommunikationsverbindung K1 als auch eine indirekte Kommunikationsverbindung K2 über den PC, d.h. den Computer des Fahrzeughalters, erfolgen.

In beiden Fällen erfolgt die Übergabe der Daten an eine Datenbank DB des Rechenzentrums R, wobei auch mehrere Rechenzentren zur Verfügung gestellt werden können, insbesondere kann auch jedes Rechenzentrum für eine unterschiedliche Kategorie von Daten vorgesehen sein.

Die Daten sind wie hier beispielhaft dargestellt z.B. die Fahrgestellnummer, Herstellerinformationen, Kilometerleistungen gemessene Abgase etc. Die verschiedenen Interessenten können sodann auf die bestimmten Felder, die jeweils für diese Interessenten vorgesehen sind, zugreifen.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

## Patentansprüche

1. Verfahren zur Verwaltung von Daten, insbesondere Betriebsdaten, eines Kraftfahrzeugs, bei dem Daten eines Kraftfahrzeugs in einen fahrzeuginternen Speicher geschrieben und gespeichert werden, **dadurch gekennzeichnet, dass** die gespeicherten Daten dem erfassenden Fahrzeug (F) mittels einer Fahrzeugkennung zugeordnet werden und durch eine Telekommunikationsverbindung (K, K1, K2) an wenigstens ein Rechenzentrum ( R) eines Telekommunikationsnetzes übertragen werden und dort zum Abruf für interessierte Dritte (D) zur Verfügung gehalten werden.

2. Verfahren nach Anspruch 1, **dadurch gekennzeichnet, dass** ein Fahrzeug (F) eine Kommunikationsvorrichtung umfasst, mittels der direkt aus dem Fahrzeug (F) die Daten über ein Telekommunikationsnetz an das wenigstens eine Rechenzentrum ( R) übermittelt werden.

3. Verfahren nach einem der vorherigen Ansprüche, **dadurch gekennzeichnet, dass** ein Fahrzeug (F) eine Kommunikationsvorrichtung umfasst, mittels der die Daten zunächst an eine von mehreren stationären Empfangsstellen ( E) übermittelt werden, insbesondere mittels einer Nahfeldkommunikation (KN), wobei die Daten anschließend von der Empfangsstelle (E) an das wenigstens eine Rechenzentrum ( R) durch eine Telekommunikationsverbindung (K) weitergeleitet werden, insbesondere wobei eine Empfangsstelle (E ) beispielsweise und nicht abschließend gebildet wird durch eine Empfangsvorrichtung an Tankstellen (T), an Brücken, beim technischen Überwachungsverein, Abstellplätzen, Ampelanlagen.

4. Verfahren nach einem der vorherigen Ansprüche, **dadurch gekennzeichnet, dass** ein Fahrzeug (F) einen mobilen aus dem Fahrzeug entfernbaren Datenträger (CaLC) umfasst, mittels dem die Daten aus dem Fahrzeug (F) entnehmbar und an eine Datenverarbeitungsanlage (C), insbesondere des Fahrzeugnutzers übertragbar sind, wobei die Daten von der Datenverarbeitungsanlage ( C) über ein Telekommunikationsnetzwerk an das wenigstens eine Rechenzentrum ( R) übermittelt werden.

5. Verfahren nach einem der vorherigen Ansprüche, **dadurch gekennzeichnet, dass** die Daten, insbesondere mittels des Datenträgers nach Menge oder Kategorien beschränkt übertragen werden.

6. Verfahren nach einem der vorherigen Ansprüche, **dadurch gekennzeichnet, dass** die Daten kategorisiert werden, insbesondere wobei ein Zugriff auf die Daten seitens Dritter (D) kategorieabhängig ist und insbesondere wobei eine Kategorisierung erfolgt nach z.B. Händlerdaten, Nutzerdaten, Herstellerdaten, Behördendaten.

7. Verfahren nach Anspruch 6, **dadurch gekennzeichnet, dass** die Kategorisierung im Fahrzeug (F) erfolgt und kategorisierte Daten übertragen werden.

8. Verfahren nach Anspruch 6, **dadurch gekennzeichnet, dass** die Daten ohne Kategorisierung übertragen werden und innerhalb eines Rechenzentrums ( R) eine Kategorisierung erfolgt.

9. Verfahren nach einem der vorherigen Ansprüche, **dadurch gekennzeichnet, dass** fahrzeugbezogene Abgaben, insbesondere Steuern, anhand von den erhobenen Fahrzeugdaten, insbesondere anhand des Treibstoffverbrauchs und/oder Abgasausstoß individuell bestimmt werden, insbesondere wobei durch die Abgaben begünstigte Behörden auf die erhobenen Daten und ermittelten Abgaben zugreifen.

10. Verfahren nach einem der vorherigen Ansprüche, **dadurch gekennzeichnet, dass** der Nutzer eines Fahrzeugs (F) die Nutzung der Daten seines Fahrzeugs (F) freigibt, insbesondere wobei die Freigabe kategorieabhängig erteilt wird.

11. Verfahren nach einem der vorherigen Ansprüche, **dadurch gekennzeichnet, dass** die interessierten Dritten (D) gebildet werden durch z.B. Hersteller, Händler, Fahrzeugnutzer, Behörden, Versicherungen, Pannendienste, insbesondere wobei die Dritten einer Kategorie zugeordnet sind und kategorieabhängig auf die Daten zugreifen.

12. Verfahren nach einem der vorherigen Ansprüche, **dadurch gekennzeichnet, dass** ein mobiler Datenträger (CaLC) am Ende der Lebensdauer eines Fahrzeugs (F) an den Hersteller oder eine Behörde übermittelt wird.

13. System zur Verwaltung von Daten, insbesondere Betriebsdaten, eines Kraftfahrzeugs, bei dem Daten eines Kraftfahrzeugs in einen fahrzeuginternen Speicher geschrieben und gespeichert werden, **dadurch gekennzeichnet, dass** die gespeicherten Daten dem erfassenden Fahrzeug (F) mittels einer Fahrzeugkennung zugeordnet werden und durch eine Telekommunikationsverbindung (K, K1, K2) an wenigstens ein Rechenzentrum (R ) eines Telekommunikationsnetzes übertragbar sind und dort zum Abruf für interessierte Dritte zur Verfügung stehen.
